# EUROPÄISCHE PATENTSCHRIFT

(11) **EP 3 208 151 B1**
(45) Veröffentlichungstag und Bekanntmachung des Hinweises auf die Patenterteilung: **17.01.2018**
(21) Anmeldenummer: 16155865.5
(22) Anmeldetag: 16.02.2016
(51) Int. Cl.: B60R 1/074, H02K 7/116

(54) **ABKLAPPVORRICHTUNG FÜR EINEN AUSSENSPIEGEL**
FOLDING DEVICE FOR AN EXTERNAL MIRROR
DISPOSITIF RABATTABLE POUR UN RÉTROVISEUR EXTÉRIEUR

(43) Veröffentlichungstag der Anmeldung: 23.08.2017
(73) Patentinhaber: Magna Auteca GmbH, 8160 Krottendorf bei Weiz (AT)
(72) Erfinder: FUCHS, Reinhard, 8212 Pischelsdorf (AT); SCHADLER, Bernhard, 8211 Oberrettenbach (AT)
(74) Vertreter: Zangger, Bernd

(56) Entgegenhaltungen:
- WO-A1-2015/008235
- DE-A1- 19 513 970
- US-A- 3 848 477

## Beschreibung

### Gebiet der Erfindung

Die vorliegende Erfindung betrifft eine Abklappvorrichtung für einen Außenspiegel eines Kraftfahrzeuges, einen Außenspiegel eines Kraftfahrzeuges umfassend eine solche Abklappvorrichtung und ein Verfahren zum Einstellen einer solchen Abklappvorrichtung.

### Stand der Technik

Derartige Abklappvorrichtungen werden in Außenspiegeln von Kraftfahrzeugen verwendet, wobei der Außenspiegel mittels der Abklappvorrichtung insbesondere durch einen elektrischen Antrieb der Abklappvorrichtung zwischen einer Fahrstellung (ausgeklappt) und einer Parkstellung (eingeklappt) verstellbar ist.

Der Antrieb einer solchen Abklappvorrichtung umfasst üblicherweise einen elektrischen Motor mit einer Motorwelle, die beispielsweise über ein Schneckengetriebe eine Klappbewegung zwischen dem Antrieb und einem Abtrieb des Schneckengetriebes auslösen kann. Dabei kann eine Schnecke auf die Motorwelle fest aufgepresst sein (Motorschnecke). Die Axialkräfte die dann auf die Motorschnecke wirken, werden in eine Richtung im Motor intern abgefangen, in die andere Richtung stützt beispielsweise ein Gehäuseelement das Motorwellenende.

Das Einspannmaß des Motors einer solchen Abklappvorrichtung unterliegt fertigungsbedingt relativ großer Toleranz. Ist der zur Verfügung stehende Raum zwischen einem Motorträger und dem Gehäuseelement zu klein, verursacht die entstehende axiale Klemmung einen unzulässig hohen Laufstrom des Motors im Betrieb. Ist er wiederum zu groß, so entstehen bei Drehrichtungsänderungen Geräusche durch Anlagewechsel der Motorwelle. Der Impuls bei Drehrichtungsänderung ist aufgrund der hohen Motordrehzahl und der großen Masse (Motorschnecke, Motorwelle und Blechpaket mit Kupferwicklungen) so groß, dass ein deutliches "Klack"-Geräusch hörbar wird, welches vom Fahrer des Kraftfahrzeugs als störend empfunden wird.

Die WO 2015/008235 A1 offenbart eine Antriebsvorrichtung für einen Außenspiegel, mit einem Motor der in einem oberen Gehäuseteil befestigt ist, einer Feder die in einem unteren Gehäuseteil befestigt ist und einer auf der Feder montierten Kappe, wobei die Kappe eine Rotationsachse des Motors empfängt.

### Zusammenfassung der Erfindung

Es ist eine Aufgabe der Erfindung, eine Abklappvorrichtung für einen Außenspiegel und einen Außenspiegel umfassend eine solche Abklappvorrichtung anzugeben, der bei Drehrichtungsänderungen weniger Geräusche verursacht und dabei nur einen geringen Laufstrom benötigt.

Eine weitere Aufgabe der Erfindung ist es, ein Verfahren zum Einstellen einer erfindungsgemäßen Abklappvorrichtung anzugeben, das einen optimierten Betrieb der Abklappvorrichtung ermöglicht.

Die Lösung der Aufgabe erfolgt durch eine Abklappvorrichtung für einen Außenspiegel eines Kraftfahrzeuges der einen Spiegelfuß und einen Spiegelkopf umfasst, wobei mittels der Abklappvorrichtung der Spiegelkopf relativ zum Spiegelfuß ein- und/oder ausklappbar ist, wobei die Abklappvorrichtung einen mit einem der Elemente Spiegelkopf oder Spiegelfuß verbindbaren Träger umfasst und einen am Träger befestigten Motor mit einer Motorwelle umfasst, wobei die Abklappvorrichtung einen mit dem anderen der Elemente Spiegelfuß oder Spiegelkopf verbindbaren Abtrieb umfasst, wobei der Abtrieb über ein Getriebe mit der Motorwelle verbunden ist, wobei ein Druckstück derart am Träger fixiert ist, dass das Druckstück die Motorwelle gegen den Motor drückt, wobei das Druckstück über eine Einstellschraube im Wesentlichen axial gegen die Motorwelle verstellbar ist.

Erfindungsgemäß wird ein Druckstück verwendet, das einen optimierten Druck auf die Motorwelle ausüben kann um ein optimiertes axiales Spiel der Motorwelle zu erreichen und hierdurch Geräuschentwicklungen beim Lastwechsel zu verringern.

Die Lösung der Aufgabe erfolgt auch durch ein Verfahren zum Einstellen einer Abklappvorrichtung für einen Außenspiegel eines Kraftfahrzeuges, der einen Spiegelfuß und einen Spiegelkopf umfasst, wobei mittels der Abklappvorrichtung der Spiegelkopf relativ zum Spiegelfuß ein- und/oder ausklappbar ist, wobei die Abklappvorrichtung einen mit einem der Elemente Spiegelkopf oder Spiegelfuß verbindbaren Träger umfasst und einen am Träger befestigten Motor mit einer Motorwelle umfasst, wobei die Abklappvorrichtung einen mit dem anderen der Elemente Spiegelfuß oder Spiegelkopf verbindbaren Abtrieb umfasst, wobei der Abtrieb über ein Getriebe mit der Motorwelle verbunden ist, wobei ein Druckstück derart am Träger fixiert ist, dass das Druckstück die Motorwelle gegen den Motor drückt, wobei der Motor über eine Spannungsquelle mit einer konstanten Spannung bestromt wird, wobei die Stromstärke der Motorbestromung gemessen wird, wobei der Druck des Druckstückes auf die Motorwelle, insbesondere über eine Einstellschraube oder eine Spindel oder einen Zylinder, verändert wird bis eine festgelegte Stromstärke gemessen wird.

Auf diese Weise kann, insbesondere bei der Herstellung der Abklappvorrichtung und/oder des Außenspiegels, ein optimales axiales Spiel für die Motorwelle der Abklappvorrichtung aufgefunden werden, so dass Geräuschentwicklungen vermieden werden, die benötigte Stromstärke aber gering gehalten werden kann.

Weiterbildungen der Erfindung sind in den abhängigen Ansprüchen, der Beschreibung sowie den beigefügten Zeichnungen angegeben.

Vorzugsweise umfasst das Getriebe der Abklappvorrichtung zumindest eine erste Schnecke, bevorzugt zusätzlich eine zweite Schnecke, wobei die erste Schnecke an der Motorwelle angebracht ist und die bevorzugte zweite Schnecke an einer Zwischenwelle angebracht ist. Die erste Schnecke kann ein Schneckenrad der Zwischenwelle antreiben. Die zweite Schnecke, auf der Zwischenwelle, kann mit einem feststehenden als Abtriebszahnrad dienenden weiteren Schneckenrad kämmen. Bei einer Klappbewegung kann sich der Motor oder bevorzugt die Zwischenwelle samt dem Motor um den stehenden Abtrieb schrauben. Die Schnecken können beispielsweise als ZI-Schnecken ausgebildet sein. Die Schneckenräder können als Stirnräder, insbesondere als schrägverzahnte Stirnräder, ausgebildet sein.

Vorzugsweise ist das Druckstück zwischen der Motorwelle und einem Gehäuseteil, insbesondere einem Deckel, angeordnet, insbesondere eingespannt.

Bevorzugt ist das Druckstück über eine Einstellschraube im Wesentlichen axial gegen die Motorwelle verstellbar, wobei die Einstellschraube besonders bevorzugt mit einem Gewinde im Träger in Eingriff ist. Die im Wesentlichen axiale Verstellung des Druckstückes in Bezug auf die Motorwelle kann auch erreicht werden, wenn das Druckstück zusätzlich zu einer axialen Komponente der Bewegung auch eine Komponente in einer nicht axialen Richtung aufweist, beispielsweise bei einer Schwenkbewegung bzw. Kippbewegung des Druckstückes über eine von der Motorwellenachse beabstandete Schwenkachse. Über eine Gewindeselbsthemmung der Einstellschraube am Träger kann das Druckstück nach Einstellung des gewünschten axialen Spiels in Position gehalten werden.

Vorzugsweise ist das Druckstück zumindest an einem Befestigungspunkt, bevorzugt an einer Befestigungsachse, kippbar im Träger eingehängt, wobei der Befestigungspunkt bzw. die Befestigungsachse auf einer der Einstellschraube gegenüberliegenden Seite der Motorwelle bzw. der Motorwellenachse liegt. Durch die Gewindeselbsthemmung der Einstellschraube wird ein ungewolltes Kippen bzw. Verschwenken des Druckstücks verhindert.

Das Druckstück kann auch zum Halten eines bestimmten axialen Spiels am Träger verschweißt sein, insbesondere wenn keine an der Abklappvorrichtung dauerhaft verbleibende Einstellschraube verwendet wird.

Bevorzugt stehen die Motorwelle und die Achse des Abtriebs zueinander parallel wodurch die Abklappvorrichtung einen kleinen Bauraum einnehmen kann.

Vorzugsweise werden der Motor, der Abtrieb und das Getriebe zwischen Motorwelle und Abtrieb durch ein einziges Bauteil, nämlich den Träger, zueinander positioniert, so dass die Achsabstände von Motorwelle, Achse des Abtriebs und den Achsen der dazwischen liegenden Getriebeelemente, insbesondere einer Zwischenwelle, durch das einzige Bauteil, nämlich den Träger, festgelegt werden. Hierdurch kommt es bei einem Versatz der positionierenden Elemente bei der Montage nicht zu Abweichungen der Achsabstände, was wiederum zu erhöhter Geräuschentwicklung und Verschleiß führen würde.

Erfindungsgemäß kann ein Außenspiegel eines Kraftfahrzeuges einen Spiegelfuß, einen Spiegelkopf und eine erfindungsgemäße Abklappvorrichtung umfassen, wobei der Träger der Abklappvorrichtung mit dem Spiegelkopf oder dem Spiegelfuß verbunden ist, wobei der Abtrieb der Abklappvorrichtung mit dem anderen der genannten Elemente, nämlich dem Spiegelfuß oder dem Spiegelkopf, verbunden ist, so dass mittels der Abklappvorrichtung der Spiegelkopf relativ zum Spiegelfuß ein- und/oder ausklappbar ist.

Der Träger kann mittels einer starken Spiegelkopf-Druckfeder gegen das mit dem Abtrieb verbindbare Element Spiegelfuß oder Spiegelkopf oder eine damit drehfeste Rastscheibe vorgespannt sein. Die Spiegelkopf-Druckfeder kann Teil einer Sicherheitsvorrichtung sein, die eine Verdrehung zwischen Spiegelkopf und Spiegelfuß bei großer äußerer Krafteinwirkung zulässt. Die Spiegelkopf-Druckfeder kann außerhalb des Abklappantriebs angeordnet sein oder auch im Abklappantrieb integriert sein.

Zum Einstellen des axialen Spiels des Druckstücks einer erfindungsgemäßen Abklappvorrichtung oder eines erfindungsgemäßen Außenspiegels kann der Motor der Abklappvorrichtung über eine Spannungsquelle mit einer konstanten Spannung bestromt wird, wobei die Stromstärke der Motorbestromung gemessen wird, wobei der Druck des Druckstückes auf die Motorwelle, insbesondere über eine Einstellschraube oder eine Spindel oder einen Zylinder, verändert wird, insbesondere erhöht wird, bis eine festgelegte Stromstärke gemessen wird.

Bei Verwendung einer an der Abklappvorrichtung dauerhaft verbleibenden Einstellschraube sind keine weiteren Befestigungsmaßnahmen nötig und das Druckstück wird über die Gewindeselbsthemmung der Einstellschraube in Position gehalten.

Insbesondere bei Verwendung einer nur zur Einstellung verwendeten Schraube, Spindel oder eines beispielsweise pneumatischen Zylinders kann bei Anliegen der festgelegten Stromstärke das Druckstück am Träger fixiert werden, insbesondere verschweißt werden.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer erfindungsgemäßen Abklappvorrichtung.
- Fig. 2: ist eine dreidimensionale Explosionsdarstellung einer Abklappvorrichtung gemäß Fig. 1.
- Fig. 3: ist eine Schnittansicht des verbauten Druckstückes und der Einstellschraube in einer erfindungsgemäßen Abklappvorrichtung.
- Fig. 4: ist eine schematische Darstellung eines erfindungsgemäßen Verfahrens zum Einstellen einer Abklappvorrichtung mittels Einstellschraube.
- Fig. 5: ist eine schematische Darstellung eines erfindungsgemäßen Verfahrens zum Einstellen einer Abklappvorrichtung mittels Verschweißung.

### Detaillierte Beschreibung der Erfindung

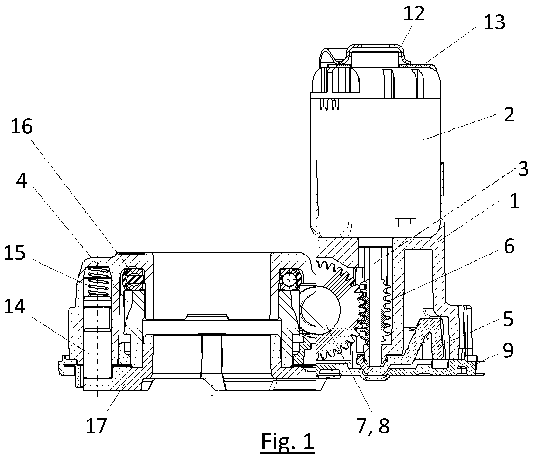

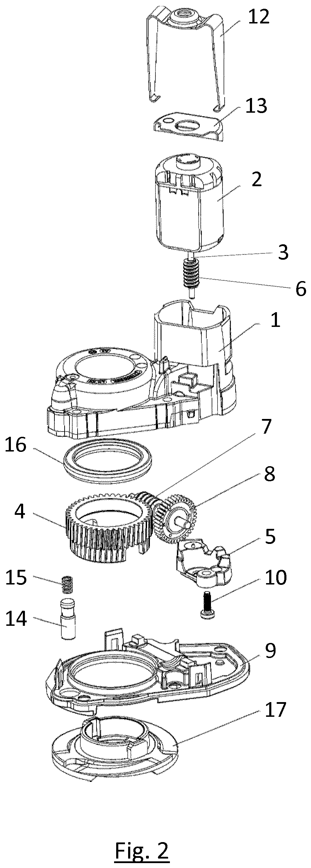

In den Fig. 1 und 2 ist eine erfindungsgemäße Abklappvorrichtung dargestellt.

Der Antrieb der Abklappvorrichtung, insbesondere der Motor 2, ist über einen Träger 1 mit einem nicht dargestellten Spiegelkopf eines Außenspiegels verbunden.

Das Abtriebsrad 4 ist formschlüssig mit der Rastscheibe 17 verbunden. Die Rastkontur an der Unterseite der Rastscheibe 17 bildet zusammen mit einer entsprechenden Gegenkontur am Spiegelfuß eine bei Überlast überwindbare drehfeste Verbindung. Der mit einer Raststift-Druckfeder 15 belastete Raststift 14 gibt zusammen mit einer Anschlagkontur auf der Oberseite der Rastscheibe 17 die Fahrstellung vor.

Ein Getriebe zwischen Motor 2 und Abtriebszahnrad 4 ist als zweistufiges Schneckengetriebe ausgeführt, wobei sich bei Klappbewegung eine Zwischenwelle 8 um das stehende Abtriebszahnrad 4 schraubt. Die Zwischenwelle 8 weist eine Schnecke aus Stahl, nämlich die zweite Schnecke 7, auf, das in Eingriff mit dem Abtriebszahnrad 4 steht und weist ein aufgespritztes Stirnrad aus Kunststoff auf. Dieses Stirnrad wird durch die erste Schnecke 6, nämlich die Motorschnecke, angetrieben, wobei die Motorschnecke auf die Motorwelle 3 fest aufgepresst ist. Die Axialkräfte die auf die Motorschnecke 6 wirken, werden in eine Richtung im Motor 2 intern abgefangen, in die andere Richtung stützt das Druckstück 5 das Motorwellenende.

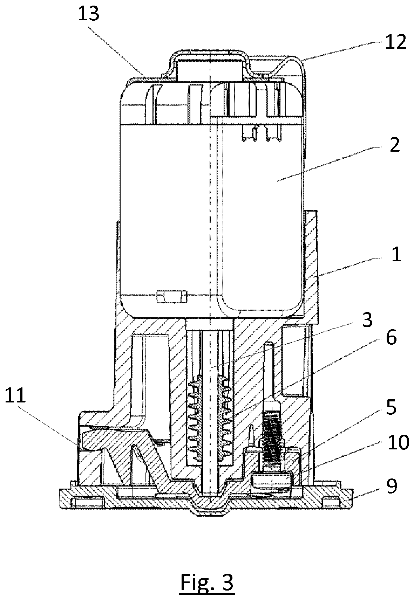

Das Druckstück 5 ist zwischen der Motorwelle 3 und dem Deckel 9 angeordnet. Fig. 3 zeigt einen detaillierteren Schnitt durch das Druckstück 5 und die Einstellschraube 10. Der Elektromotor 2 ist mit der Motorspannklammer 12 fest in den Träger 1 gespannt, wobei die Motorwelle 3 im vorderen Bereich radial im Träger 1 geführt ist, axial jedoch aus diesem herausragt und mit dem Druckstück 5 in Kontakt steht. Das Druckstück 5 ist dabei in einem Schlitz im Träger 1 eingehängt, so dass das Druckstück 5 an einem Befestigungspunkt 11 bzw. einer Befestigungsachse am Träger 1 aufliegt. Das Druckstück 5 ist mittels der Einstellschraube 10, die dem Befestigungspunkt 11 in Bezug auf die Motorwelle 3 gegenüberliegt, so dass die Motorwelle 3 zwischen Befestigungspunkt 11 und Einstellschraube 10 angeordnet ist, in Richtung zum Träger 1 verstellbar und drückt hierbei auf die Motorwelle 3.

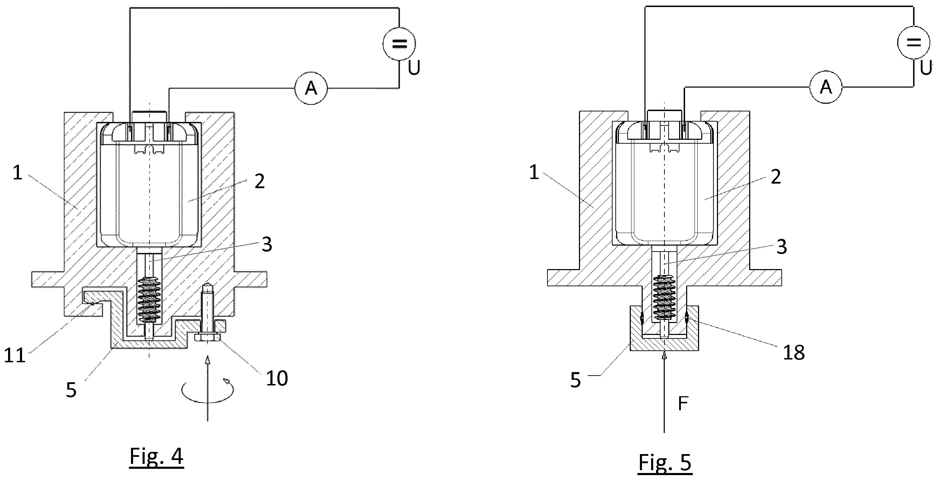

Fig. 4 zeigt ein Schema der Spieleinstellung des axialen Spiels der Motorwelle 3 mit Hilfe einer Einstellschraube 10. Das Druckstück 5 ist im Träger 1 eingehängt und lässt sich um den Befestigungspunkt 11 kippen. Der Motor 2 ist an eine Gleichspannungsquelle U angeschlossen und wird, unter Messung des Laufstroms, also der Stromstärke, mittels eines Amperemeters A, bestromt. Wird die Einstellschraube 10 eingeschraubt, stützt sich das Druckstück 5 am Träger 1 ab und übt einen Druck auf die Motorwelle 3 aus. Die Einstellschraube 10 wird nun solange eingeschraubt bis ein festgelegter Laufstrom am Amperemeter A erreicht ist. Hierdurch lässt sich eine definierte Vorspannung (=negatives Axialspiel) der Motorwelle 3 einstellen.

Fig. 5 zeigt ein alternatives Verfahren zur Einstellung der Abklappvorrichtung und eine alternative Ausführung des Druckstücks 5. Dieses wird während des Zusammenbaus mittels einer Schraube, Spindel oder eines Zylinders mit steigender Kraft F gegen den Träger 1 gedrückt bis ein festgelegter Laufstrom erreicht ist und am Amperemeter A angezeigt wird. In dieser Position wird das Druckstück 5 mittels Verschweißung 18, zum Beispiel mittels Laserverschweißung, mit dem Träger 1 verbunden.

### Bezugszeichenliste

- 1: Träger
- 2: Motor
- 3: Motorwelle
- 4: Abtrieb
- 5: Druckstück
- 6: erste Schnecke
- 7: zweite Schnecke
- 8: Zwischenwelle
- 9: Deckel
- 10: Einstellschraube
- 11: Befestigungspunkt
- 12: Motorspannklammer
- 13: Isolationskappe
- 14: Raststift
- 15: Raststift-Druckfeder
- 16: Axialkugellager
- 17: Rastscheibe
- 18: Verschweißung
- U: Spannungsquelle
- A: Amperemeter
- F: Kraft

## Patentansprüche

1. Abklappvorrichtung für einen Außenspiegel eines Kraftfahrzeuges der einen Spiegelfuß und einen Spiegelkopf umfasst, wobei mittels der Abklappvorrichtung der Spiegelkopf relativ zum Spiegelfuß ein- und/oder ausklappbar ist, wobei die Abklappvorrichtung einen mit einem der Elemente Spiegelkopf oder Spiegelfuß verbindbaren Träger (1) umfasst und einen am Träger (1) befestigten Motor (2) mit einer Motorwelle (3) umfasst, wobei die Abklappvorrichtung einen mit dem anderen der Elemente Spiegelfuß oder Spiegelkopf verbindbaren Abtrieb (4) umfasst, wobei der Abtrieb (4) über ein Getriebe mit der Motorwelle (3) verbunden ist, wobei ein Druckstück (5) derart am Träger (1) fixiert ist, dass das Druckstück (5) die Motorwelle (3) gegen den Motor (2) drückt, **dadurch gekennzeichnet, dass** das Druckstück (5) über eine Einstellschraube (10) im Wesentlichen axial gegen die Motorwelle (3) verstellbar ist.

2. Abklappvorrichtung nach Anspruch 1,
**dadurch gekennzeichnet, dass** das Getriebe zumindest eine erste Schnecke (6) umfasst, bevorzugt zusätzlich eine zweite Schnecke (7), wobei die erste Schnecke (6) an der Motorwelle (3) angebracht ist und die bevorzugte zweite Schecke (7) an einer Zwischenwelle (8) angebracht ist.

3. Abklappvorrichtung nach zumindest einem der vorhergehenden Ansprüche,
**dadurch gekennzeichnet, dass** das Druckstück (5) zwischen der Motorwelle (3) und einem Gehäuseteil, insbesondere einem Deckel (9), angeordnet ist.

4. Abklappvorrichtung nach zumindest einem der vorhergehenden Ansprüche,
**dadurch gekennzeichnet, dass** die Einstellschraube (10) mit einem Gewinde im Träger (1) in Eingriff ist.

5. Abklappvorrichtung nach Anspruch 4,
**dadurch gekennzeichnet, dass** das Druckstück (5) zumindest an einem Befestigungspunkt (11), bevorzugt an einer Befestigungsachse, kippbar im Träger (1) eingehängt ist, wobei der Befestigungspunkt (11) bzw. die Befestigungsachse auf einer der Einstellschraube (10) gegenüberliegenden Seite der Motorwelle (3) liegt.

6. Abklappvorrichtung nach zumindest einem der vorhergehenden Ansprüche,
**dadurch gekennzeichnet, dass** das Druckstück (5) am Träger (1) verschweißt ist.

7. Außenspiegel eines Kraftfahrzeuges, umfassend einen Spiegelfuß, einen Spiegelkopf und eine Abklappvorrichtung nach einem der Ansprüche 1 bis 6, wobei der Träger (1) der Abklappvorrichtung mit einem der Elemente Spiegelkopf oder Spiegelfuß verbunden ist, wobei der Abtrieb (4) der Abklappvorrichtung mit dem anderen der Elemente Spiegelfuß oder Spiegelkopf verbunden ist, so dass mittels der Abklappvorrichtung der Spiegelkopf relativ zum Spiegelfuß ein- und/oder ausklappbar ist.

8. Verfahren zum Einstellen einer Abklappvorrichtung für einen Außenspiegel eines Kraftfahrzeuges der einen Spiegelfuß und einen Spiegelkopf umfasst, wobei mittels der Abklappvorrichtung der Spiegelkopf relativ zum Spiegelfuß ein- und/oder ausklappbar ist, wobei die Abklappvorrichtung einen mit einem der Elemente Spiegelkopf oder Spiegelfuß verbindbaren Träger (1) umfasst und einen am Träger (1) befestigten Motor (2) mit einer Motorwelle (3) umfasst, wobei die Abklappvorrichtung einen mit dem anderen der Elemente Spiegelfuß oder Spiegelkopf verbindbaren Abtrieb (4) umfasst, wobei der Abtrieb (4) über ein Getriebe mit der Motorwelle (3) verbunden ist, wobei ein Druckstück (5) derart am Träger (1) fixiert ist, dass das Druckstück (5) die Motorwelle (3) gegen den Motor (2) drückt,
**dadurch gekennzeichnet, dass** der Motor (2) über eine Spannungsquelle (U) mit einer konstanten Spannung bestromt wird, wobei die Stromstärke der Motorbestromung gemessen wird, wobei der Druck des Druckstückes (5) auf die Motorwelle (3), insbesondere über eine Einstellschraube (10) oder eine Spindel oder einen Zylinder, verändert wird bis eine festgelegte Stromstärke gemessen wird.

9. Verfahren nach Anspruch 8,
**dadurch gekennzeichnet, dass** bei Erreichen der festgelegten Stromstärke das Druckstück (5) am Träger (1) fixiert wird, insbesondere verschweißt wird.

## Claims

1. Folding device for an exterior mirror of a motor vehicle, which comprises a mirror foot and a mirror head, wherein by means of the folding device, the mirror head can be folded in and/or out relative to the mirror foot, wherein the folding device comprises a carrier (1) which can be connected to one of the elements of mirror head or mirror foot, and a motor (2) attached to the carrier (1) with a motor shaft (3), wherein the folding device comprises an output drive (4) which can be connected to the other of the elements of mirror foot and mirror head, wherein the output drive (4) is connected to the motor shaft (3) via a gear mechanism, wherein a pressure piece (5) is fixed to the carrier (1) such that the pressure piece (5) presses the motor shaft (3) against the motor (2) **characterized in that** the pressure piece (5) can be adjusted substantially axially relative to the motor shaft (3) by means of an adjustment screw (10).

2. Folding device according to claim 1, **characterized in that** the gear mechanism comprises at least one first worm gear (6), preferably also a second worm gear (7), wherein the first worm gear (6) is mounted on the motor shaft (3) and the preferred second worm gear (7) is mounted on an intermediate shaft (8).

3. Folding device according to at least one of the preceding claims, **characterized in that** the pressure piece (5) is arranged between the motor shaft (3) and a housing part, in particular a cover (9).

4. Folding device according to at least one of the preceding claims, ,
wherein the adjustment screw (10) engages with a thread in the carrier (1).

5. Folding device according to claim 4, **characterized in that** the pressure piece (5) is inserted pivotably in the carrier (1) at least at one fixing point (11), preferably at a fixing axis, wherein the fixing point (11) or fixing axis lies on a side of the motor shaft (3) opposite the adjustment screw (10).

6. Folding device according to at least one of the preceding claims, **characterized in that** the pressure piece (5) is welded to the carrier (1).

7. Exterior mirror of a motor vehicle, comprising a mirror foot, a mirror head and a folding device according to any of claims 1 to 6, wherein the carrier (1) of the folding device is connected to one of the elements of mirror head or mirror foot, wherein the output drive (4) of the folding device is connected to the other of the elements of mirror foot or mirror head, so that by means of the folding device, the mirror head can be folded in and/or out relative to the mirror foot.

8. Method for setting a folding device for an exterior mirror of a motor vehicle, which comprises a mirror foot and a mirror head, wherein by means of the folding device, the mirror head can be folded in and/or out relative to the mirror foot, wherein the folding device comprises a carrier (1) and a motor (2) attached to the carrier (1) with a motor shaft (3), wherein the folding device comprises an output drive (4) which can be connected to the other of the elements of mirror foot and mirror head, wherein the output drive (4) is connected to the motor shaft (3) via a gear mechanism, wherein a pressure piece (5) is fixed to the carrier (1) such that the pressure piece (5) presses the motor shaft (3) against the motor (2), **characterized in that** the motor (2) is supplied with a constant voltage via a voltage source (U), wherein the current intensity of the motor power supply is measured, wherein the pressure of the pressure piece (5) on the motor shaft (3) is changed, in particular via an adjustment screw (10) or a spindle or a cylinder, until an established current intensity is measured.

9. Method according to claim 8, **characterized in that** when the established current intensity is reached, the pressure piece (5) is fixed to the carrier (1), in particular welded thereto.

## Revendications

1. Dispositif rabattable pour un rétroviseur extérieur d'un véhicule automobile qui comprend une base de rétroviseur et une tête de rétroviseur, la tête de rétroviseur pouvant être rabattue vers l'intérieur et/ou vers l'extérieur par rapport à la base de rétroviseur au moyen du dispositif rabattable, le dispositif rabattable comprenant un support (1) pouvant être raccordé à l'un des éléments constitués par la tête de rétroviseur et la base de rétroviseur et comprenant un moteur (2) fixé au support (1) avec un arbre de moteur (3), le dispositif rabattable comprenant une prise de force (4) pouvant être raccordée à l'autre des éléments constitués par la base de rétroviseur et la tête de rétroviseur, la prise de force (4) étant raccordée à l'arbre de moteur (3) par le biais d'une transmission, une pièce de pression (5) étant fixée sur le support (1) de telle sorte que la pièce de pression (5) presse l'arbre de moteur (3) contre le moteur (2), **caractérisé en ce que** la pièce de pression (5) peut être déplacée essentiellement axialement contre l'arbre de moteur (3) par le biais d'une vis de réglage (10).

2. Dispositif rabattable selon la revendication 1, **caractérisé en ce que** la transmission comprend au moins une première vis sans fin (6), de préférence en outre une deuxième vis sans fin (7), la première vis sans fin (6) étant montée sur l'arbre de moteur (3) et la deuxième vis sans fin préférée (7) étant montés sur un arbre intermédiaire (8).

3. Dispositif rabattable selon au moins l'une quelconque des revendications précédentes, **caractérisé en ce que** la pièce de pression (5) est disposée entre l'arbre de moteur (3) et une partie de boîtier, en particulier un couvercle (9).

4. Dispositif rabattable selon au moins l'une quelconque des revendications précédentes, **caractérisé en ce que** la vis de réglage (10) est en prise avec un filetage dans le support (1).

5. Dispositif rabattable selon la revendication 4, **caractérisé en ce que** la pièce de pression (5) est accrochée de manière à pouvoir basculer dans le support (1), au moins au niveau d'un point de fixation (11), de préférence au niveau d'un axe de fixation, le point de fixation (11) ou l'axe de fixation étant situé sur un côté de l'arbre de moteur (3) opposé à la vis de réglage (10).

6. Dispositif rabattable selon au moins l'une quelconque des revendications précédentes, **caractérisé en ce que** la pièce de pression (5) est soudée au support (1).

7. Rétroviseur extérieur pour un véhicule automobile, comprenant une base de rétroviseur, une tête de rétroviseur et un dispositif rabattable selon l'une quelconque des revendications 1 à 6, dans lequel le support (1) du dispositif rabattable est raccordé à l'un des éléments constitués par la tête de rétroviseur et la base de rétroviseur, la prise de force (4) du dispositif rabattable étant raccordée à l'autre des éléments constitués par la base de rétroviseur et la tête de rétroviseur, de telle sorte que la tête de rétroviseur puisse être rabattue vers l'intérieur et/ou vers l'extérieur par rapport à la base de rétroviseur au moyen du dispositif rabattable.

8. Procédé pour l'ajustement d'un dispositif rabattable pour un rétroviseur extérieur d'un véhicule automobile qui comprend une base de rétroviseur et une tête de rétroviseur, la tête de rétroviseur pouvant être rabattue vers l'intérieur et/ou vers l'extérieur par rapport à la base de rétroviseur au moyen du dispositif rabattable, le dispositif rabattable comprenant un support (1) pouvant être raccordé à l'un des éléments constitués par la tête de rétroviseur et la base de rétroviseur et comprenant un moteur (2) fixé au support (1), avec un arbre de moteur (3), le dispositif rabattable comprenant une prise de force (4) pouvant être raccordée à l'autre des éléments constitués par la base de rétroviseur et la tête de rétroviseur, la prise de force (4) étant raccordée à l'arbre de moteur (3) par le biais d'une transmission, une pièce de pression (5) étant fixée au support (1) de telle sorte que la pièce de pression (5) presse l'arbre de moteur (3) contre le moteur (2),
**caractérisé en ce que** le moteur (2) est alimenté avec une tension constante par le biais d'une source de tension (U), l'intensité du courant de l'alimentation électrique du moteur étant mesurée, la pression de la pièce de pression (5) sur l'arbre de moteur (3) étant modifiée, en particulier par le biais d'une vis de réglage (10) ou d'une broche ou d'un cylindre, jusqu'à ce qu'une intensité de courant établie soit mesurée.

9. Procédé selon la revendication 8,
**caractérisé en ce qu'**une fois atteinte l'intensité de courant établie, la pièce de pression (5) est fixée au support (1), en particulier par soudage.
